# EUROPEAN PATENT APPLICATION

(11) **EP 2 587 416 A1**
(43) Date of publication of application: **01.05.2013**
(21) Application number: 11290504.7
(22) Date of filing: 31.10.2011
(51) Int. Cl.: G06Q 10/00, G06F 17/30

(54) **Systems and methods for monitoring compliance status based on time-ordered reference periods**

(71) Applicant: Hewlett-Packard Development Company, L.P., Houston, TX 77070 (US)
(72) Inventor: Picard, Jean-Charles, 06901 Sophia-Antipolis (FR)
(74) Representative: Beccarelli, Sandra Béatrice Yvonne

(57) **Abstract**

Systems and methods for monitoring compliance status are described herein. System performance data for multiple time-ordered reference periods is determined. A compliance status for each reference period is determined based on the system performance data. For each reference period, it is determined whether the reference period is a historical reference period or a current reference period. A set of selected historical reference periods to display is determined. A graphical visualization of the set of selected historical reference periods is generated using a set of nested graphical objects. Each graphical object in the set of nested graphical objects represents a compliance status of a historical reference period of the set of selected historical reference periods.

## Description

### I. BACKGROUND

Many enterprise-level organizations (and smaller businesses) employ business applications, and in some cases, suites of business applications, to provide visibility and control over various aspects of the business. Such business applications can include service-level management ("SLM") and other applications dealing with various finance, monitoring, and/or distribution functions, to name but a few examples.

To maximize the utility of a business application, users need to have visibility into the business processes managed by the business application, to monitor the health (e.g., the efficiency, operational status) of various business processes, and of the enterprise itself. Typically, raw data related to the health of the business process may be analyzed and transformed into valuable information. However, due to the vast amounts of data, analysts have difficulties in finding relationships within the data.

### II. BRIEF DESCRIPTION OF THE DRAWINGS

The present disclosure may be better understood and its numerous features and advantages made apparent to those skilled in the art by referencing the accompanying drawings.

FIG.1 is a process flow diagram for generating a graphical visualization representing a status overview of a historical reference period in accordance with an embodiment.

**FIG.** 2 is a process flow diagram for generating a graphical visualization representing detailed status information for a selected reference period in accordance with an embodiment.

**FIG. 3** is a process flow diagram for generating a graphical status indicator representing compliance status for a next consecutive reference period in accordance with an embodiment.

**FIG. 4A** is a template for a graphical representation of a dataset in accordance with an embodiment.

**FIG. 4B** is a graphical representation of status for a service level agreement in accordance with an embodiment.

**FIG. 4C** is another graphical representation of status for a service level agreement in accordance with an embodiment.

**FIG. 4D** is yet another graphical representation of status for a service level agreement in accordance with an embodiment.

**FIG. 4E** is a graphical representation of status for a service level agreement including a status indicator in accordance with an embodiment.

**FIG. 5** illustrates a computer system in which an embodiment may be implemented.

**FIG. 6** is a topological block diagram of a Service Level Agreement (SLA) management system in accordance with an embodiment.

### III. DETAILED DESCRIPTION

Visualization tools are used to understand collected data and correlations therein. For example, "dashboards" present visualizations of business values or key performance indicator (KPI) metrics from data stored in business databases. Such visualization tools commonly use charts and graphs to visualize data, such as SLM systems performance data. These diagrams, and others, are difficult for use in perceiving data correlations, patterns, and exceptions.

Further, these diagrams, present the entire data set in a single graphical representation, showing the same level of detail throughout. However, in some deployments, not all of the metric data (e,g., compliance status) has equal relevance to a user. For example, detailed data may be more relevant from a recent reference period than from an older reference period. Where visual space is limited in a display area, for example, on a graphical user interface (GUI), a non-discriminatory graphical display of all detailed metric data can reduce the effectiveness of a visualization tool by consuming significant amounts of visual space with potentially irrelevant data.

A visualization approach for monitoring compliance status is described herein. In one embodiment, the approach distinguishes between data in the dataset, generates a more comprehensive visualization for the status data with higher priority, and generates a less detailed visualization for the status data with lower priority. The compact visualization provides a savings with respect to the screen space. This potentially allows for monitoring of several metrics (e.g., status) for several services at the same time using the same GUI, such as in a dashboard implementation, without decreasing the amount or quality of information conveyed.

Systems and methods for monitoring compliance status are described herein. System performance data for multiple time-ordered reference periods is determined. A compliance status for each reference period is determined based on the system performance data. For each reference period, it is determined whether the reference period is a historical reference period or a current reference period. A set of selected historical reference periods to display is determined. A graphical visualization of the set of selected historical reference periods is generated using a set of nested graphical objects, Each graphical object in the set of nested graphical objects represents a compliance status of a historical reference period of the set of selected historical reference periods.

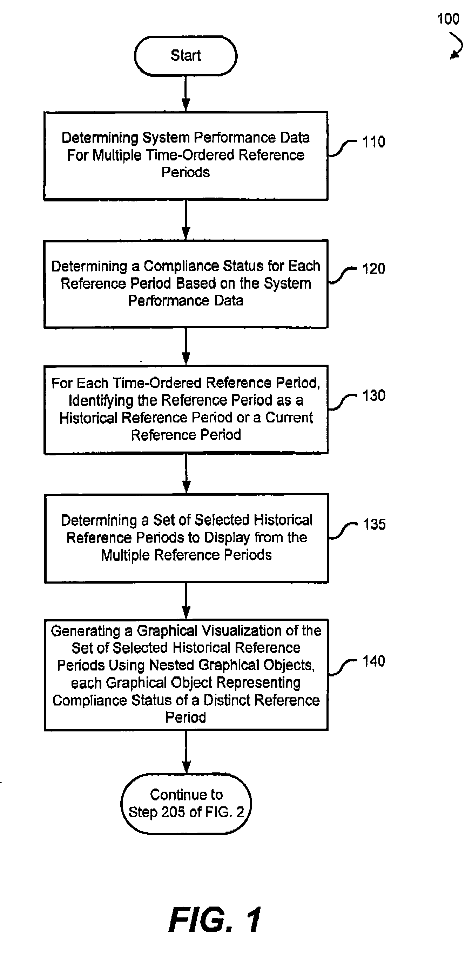

**FIG. 1** is a process flow diagram for generating a graphical visualization representing a status overview of a historical reference period in accordance with an embodiment. The depicted process flow 100 may be carried out by execution of sequences of executable instructions. In another embodiment, various portions of the process flow 100 are carried out by components of a server, an arrangement of hardware logic, e.g., an Application-Specific Integrated Circuit (ASIC), etc. For example, blocks of process flow 100 may be performed by execution of sequences of executable instructions in a compliance status monitoring module of the server.

A dashboard or other graphical user interface (GUI) may provide an interface to viewing a metric (i.e., compliance status) associated with a service level agreement (SLA).

At step 110, system performance data for multiple time-ordered reference periods are determined. As used herein, a reference period is a contractual ordered period of time in the lifecycle of a business process used to determine the compliance of the system performance. System performance data may include raw data that was generated during the operation of the business process, such as an SLA.

A metric such as status, may be determined from the system performance data. In particular, at step 120, a compliance status is determined for each reference period, based on the system performance data. Often times, a metric may be derived from data produced by a business application. In other cases, the metric may be determined by the business application itself. As used herein, a metric is any value that is used to measure the performance of a business process.

In the context of service-level management, service-level performance may be monitored in a real-time dashboard. An active service-level agreement (SLA) may be monitored for value and compliance status for each interested party, for example, to estimate the quality of service. The Service Level Agreement (SLA) is a contract between a service provider, such as a Communication Service Provider (CSP), and a customer that specifies what services and which quality of service will be furnished by the network service provider. Common SLA's include the following factors: What percentage of the time services will be available, the number of users that can be served simultaneously, specific performance benchmarks to which actual performance will be periodically compared, the schedule for notification in advance of network changes that may affect users, help desk response time for various classes of issues (Time to Repair), dial-in access availability, and usage statistics that will be provided. An active SLA is associated with at least one status value. For example a completion status of an SLA (or any other business process) may include: Status On Target, Status At Risk, Status Breached, and/or Status Unknown.

One level of distinction is made among the reference periods based on age. At step 130, for each time-ordered reference period, the reference period is identified as a historical reference period or a current reference period. As used herein, a current reference period is an on-going reference period corresponding to the time at which the graphical visualizations are generated. A historical reference period is a reference period corresponding to a time previous from the current reference period. The status data associated with the current reference period may be associated with a higher priority than that associated with the historical reference period(s). The status data associated with a lower priority is represented using a compact visualization.

A set of selected historical reference periods for display is determined, at step 135. More specifically, the number and the particular historical reference period(s) for display are determined. To determine how many of the historical reference periods should be displayed, a configuration file may be referenced. The GUI may be configured to show last *N* (where *N* is an integer representing a maximum or minimum) number of historical reference periods in a graphical visualization. For example, a maximum of five historical reference periods is determined in a default configuration.

To determine which of the historical reference periods to display, the set of historical reference periods that have been selected for display is determined. The selection may be made by a default configuration or by a user of the GUI. In a default configuration, the most recent historical reference periods (i.e., highest priority level) may be selected. For example, where a maximum of five historical reference periods may be included in a graphical visualization of the historical reference periods, the five most recent historical reference periods are selected. In other words, another level of distinction is made based on age. In this instance, the distinction is made among the historical reference periods. The more recent the historical reference periods, the higher the level of priority for the associated status data.

In another embodiment, the user of the GUI may choose a particular reference period to be displayed in a detailed visualization, and based on this selection, the preceding reference periods are selected for display in the historical (i.e., compact) visualization. Furthermore, a user may navigate through reference periods using the historical visualization portion of the GUI as a dynamic control interface. For example, the user may select (e,g., double click) an existing graphical object. By doing so, the user selects a historical reference period to be displayed in a detailed visualization, and the system selects *N* historical reference periods immediately preceding the user-selected historical reference period to be displayed in the historical visualization.

At step 140, a graphical visualization of the set of selected historical reference period(s) is generated, for example, using nested graphical objects. Each graphical object represents a compliance status for a distinct historical reference period. In one embodiment, the nested graphical objects are arranged from highest to lowest priority. For example, the graphical object representing the status data with the highest priority level is arranged at an outermost level, whereas the graphical object representing the status data with the lowest priority is arranged at an innermost nesting level.

Furthermore, the amount of space in a display area occupied by the graphical objects varies according to priority level, such that the graphical objects associated with a higher priority occupy more and the graphical objects associated with a lower priority occupy less. In particular, the graphical object at the outermost level occupies more space than the graphical object at the innermost level.

The status data may be represented by the graphical object using distinct colors/shading, where each color/shade corresponds to a status (e.g., Status On Target, Status At Risk, Status Breached, Status Unknown, etc.)

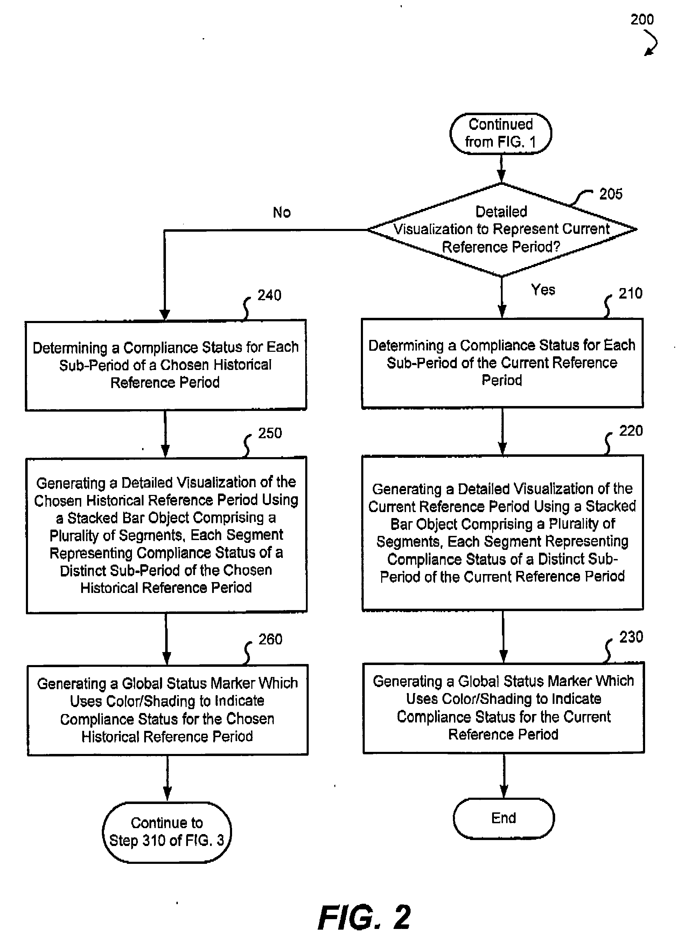

Processing continues to step 205 of FIG. 2, where a detailed graphical visualization is generated. The detailed graphical visualization is generated in addition to the graphical representation of the historical reference period(s), which, by comparison, is more compact with respect to the amount of status data visually conveyed and the amount of space occupied in a display area.

**FIG. 2** is a process flow diagram for generating a graphical visualization representing detailed status information for a selected reference period in accordance with an embodiment. The depicted process flow 200 may be carried out by execution of sequences of execuxable instructions. In another embodiment, various portions of the process flow 200 are carried out by components of a server, an arrangement of hardware logic, e.g., an Application-Specific Integrated Circuit (ASIC), etc. For example, blocks of process flow 200 may be performed by execution of sequences of executable instructions in a compliance status monitoring module of the server.

A dashboard or other graphical user interface (GUI) provides an interface to viewing a metric (e,g., compliance status) associated with the performance of a business process (e.g., an SLA). As previously described, a distinction is made with respect to the metric dataset, such that a portion of the metric dataset is represented in more detail than others. The status data associated with selected historical reference periods is presented in a compact visualization, whereas the status data associated with another reference period is presented with greater detail.

At step 205, it is determined whether the detailed visualization is to represent a current reference period. The detailed visualization is with respect to a single reference period, which may be either the current reference period or a historical reference period. For example, in a default configuration, the status of the current reference period is depicted in detail.

Where the detailed visualization is to represent the current reference period, processing continues to step 210, where a compliance status for each sub-period of the current reference period is determined. As used herein, each reference period includes *N* sub-periods (e.g., 4 sub-periods, each substantially equal to 1 week for a one month reference period), and each of the sub-periods is associated with its own metric (e.g., status) measurement.

At step 220, a detailed visualization of the current reference period is generated, for example, using a stacked bar object. The stacked bar is a graphical object including multiple segments, where each segment represents a distinct sub-period of the current reference period. More specifically, each segment represents the status of the sub-period. The status data may be represented using distinct colors/shading, where each color/shade corresponds to a status.

In addition to the status of sub-periods, additional details may be provided in the detailed visualization. At step 230, a global status marker is generated. The global status marker uses color/shading to indicate compliance status for the current reference period in its entirety, rather than per sub-period. For example, since the current reference period is being represented in the detailed visualization, the global status marker represents the compliance computed for the last sub-period status available. Other details may also be provided, for example a name of the business process being monitored (e.g., SLA name) and an indication of the reference period date range. A last refresh date, which specifies the last date and time at which the status data being presented was calculated, may also be provided.

As previously described, the detailed visualization is with respect to a single reference period, which may be either the current reference period or a historical reference period. A historical reference period may be chosen (either by a user or according to a default configuration) to be displayed in the detailed visualization.

Where the detailed visualization is to represent a chosen historical reference period, processing continues to step 240, where a compliance status for each sub-period of the chosen historical reference period is determined. For example, the user of the GUI may choose a particular historical reference period to be displayed in a detailed visualization. Step 240 is substantially similar to step 210.

At step 250, a detailed visualization of the chosen historical reference period is generated, for example, using a stacked bar object. Step 250 is substantially similar to step 220.

A global status marker may be generated at step 260 to indicate compliance status for the chosen historical reference period. This global status marker uses color/shading to indicate compliance status for the chosen historical reference period in its entirety, rather than per sub-period. For example, in a navigation mode (i.e., detail display is for a historical reference period), the global status marker is the last computed status. Step 260 is substantially similar to step 230. Other details may also be provided, for example a name of the business process being monitored (e.g., SLA name), an indication of the reference period date range, and a last refresh date may be provided.

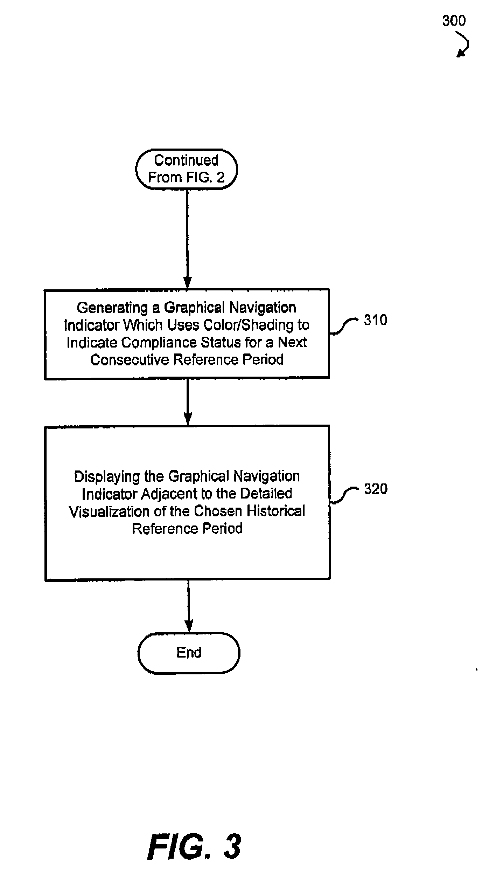

As such, the same dataset may be represented in the GUI with varying levels of detail, providing less detail for some reference periods in one GUI component, and more information for a high priority reference period in another component. Where the detailed visualization represents a historical reference period, a third component to the GUI may also be provided as will be described with respect to FIG. 3.

In one embodiment, multiple reference periods may be selected (either by a user or according to a default configuration) in the detailed visualization,

**FIG. 3** is a process flow diagram for generating a graphical status indicator representing compliance status for a next consecutive reference period in accordance with an embodiment The depicted process flow 300 may be carried out by execution of sequences of executable instructions. In another embodiment, various portions of the process flow 300 are carried out by components of a server, an arrangement of hardware logic, e.g., an Application-Specific Integrated Circuit (ASIC), etc. For example, blocks of process flow 300 may be performed by execution of sequences of executable instructions in a compliance status monitoring module of the server.

A dashboard or other graphical user interface (GUI) provides an interface to viewing a metric associated with the performance of a business application. As previously described, a distinction is made with respect to the metric dataset, such that a portion of the metric dataset is represented in more detail than others. The status data associated with a chosen historical reference period is presented in a detailed visualization, and a third component to the GUI may also be provided.

At step 310, a navigation indicator may be generated to indicate a compliance status for a next consecutive reference period. In other words, the navigation indicator represents the status of the reference period immediately following (in temporal order) the chosen historical reference period that is shown in the detailed representation. The navigation indicator uses color/shading to indicate compliance status for the consecutive reference period in its entirety, rather than per sub-period. For example, the navigation indicator represents the last-computed compliance for the current reference period.

The navigation indicator is displayed adjacent to the detailed visualization of the chosen historical reference period, at step 320. For example, the navigation indicator may be displayed as an ellipse (e.g., "...") to show the user that at least one, more recent reference period (among the time-ordered reference periods) is available than what is being displayed in the detailed visualization. The navigation indicator may be used as a dynamic control interface for the user, such that an action by a user (e.g., double-click) restores the current reference period on the detailed visualization. In one embodiment, the third component may be omitted from the GUI.

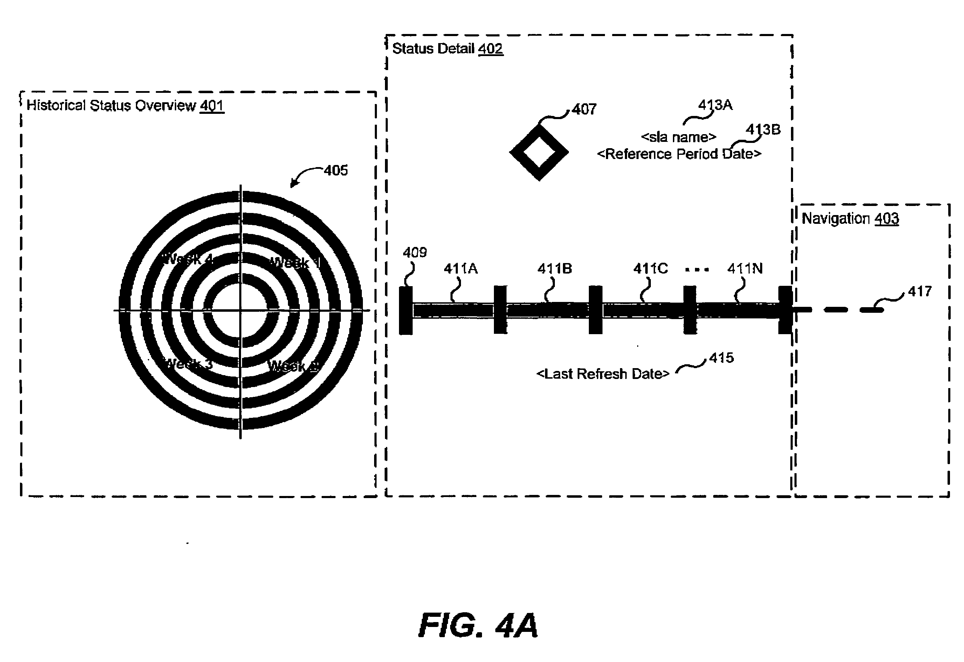

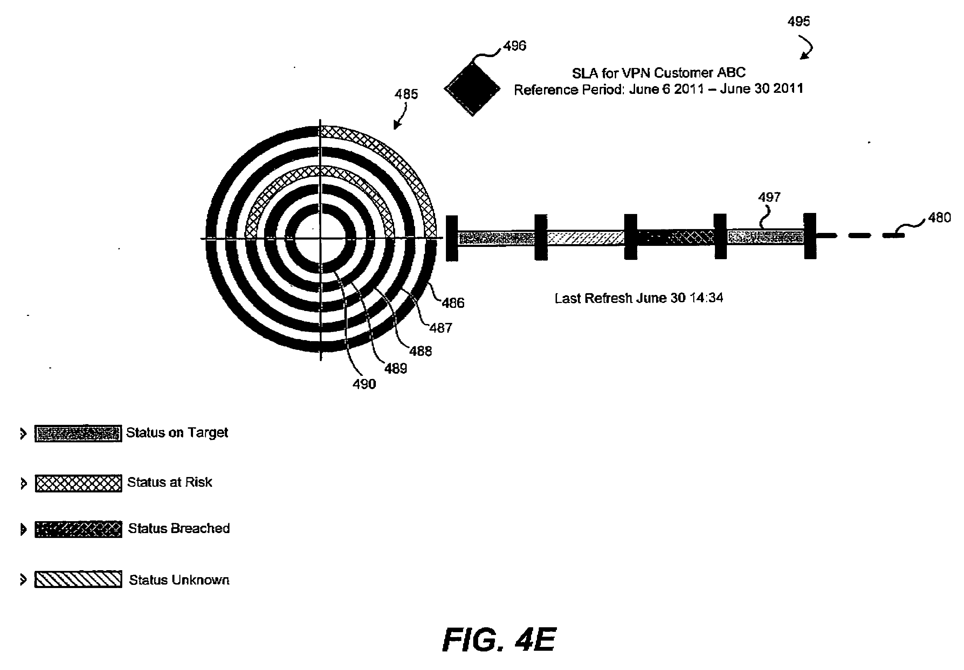

**FIG. 4A** is a template for a graphical representation of a dataset in accordance with an embodiment. The dataset may be represented using three components of a GUI: a historical status overview 401, a status detail 402, and a navigation status 403.

The historical status overview 401 component includes a graphical visualization of the set of selected historical reference periods 405, which includes a set of nested graphical rings, where each ring represents the status of a distinct historical reference period. Each ring is split into four quadrants, and each quadrant represents the status of a sub-period of the corresponding historical reference period. As such, graphical visualization 405 depicts the status of sub-periods using color/shading, rather than the status of the historical reference period in its entirety, In another embodiment, each ring may depict the status of the historical reference period in its entirety. The graphical objects may take any shape that can be nested, such as, but not limited to, a circular shape, square, rectangle, etc., or any combination of shapes.

The status detail 402 is adjacent to historical status overview 401. The status detail 402 includes a detailed visualization 409 of the status of multiple sub-periods of a reference period. The detailed visualization 409 is made up of multiple segments 411A-N, where each segment depicts a color/shade to convey the status of a distinct sub-period of the reference period. The status overview 402 also includes a global status marker 407, and other details such as the name of the SLA 413A which corresponds to the status data being presented and a reference period date 413B.

Adjacent to the status detail 402 is a navigation component 403, which includes a navigation indicator 417. The navigation indicator 417 may be used in a graphical visualization where there are additional, more recent, reference periods available than what is actually shown in the status detail 402. The navigation indicator 417 may not be used, for example, where the status detail 402 represents a current reference period.

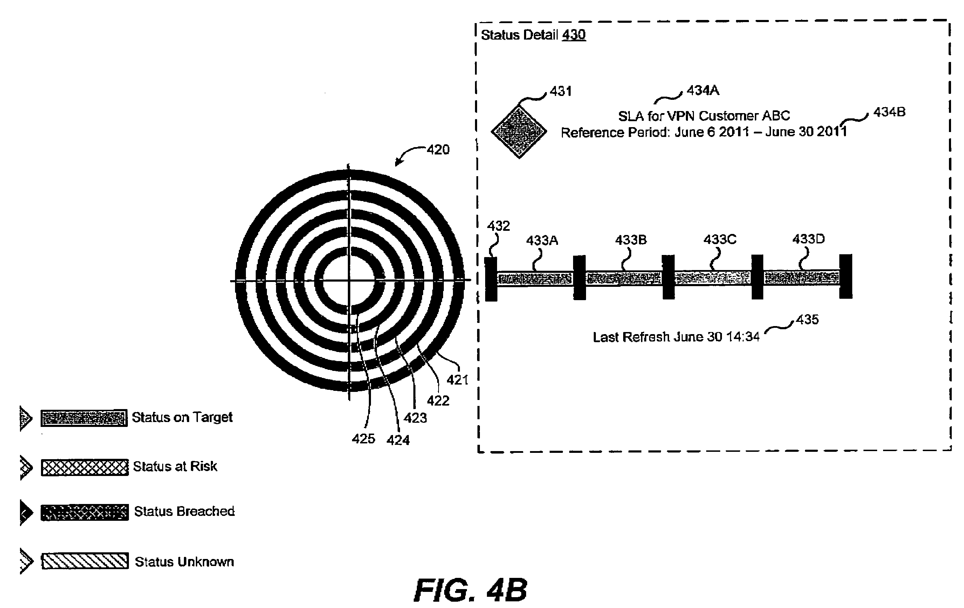

**FIG. 4B** is a graphical representation of status for a service level agreement in accordance with an embodiment. The completion status may be represented using a graphical visualization of the set of selected historical reference periods 420 and a status detail 430 component.

The status detail 430 component indicates that the business process being monitored 434A is an SLA for a Virtual Private Network (VPN) customer ABC. The date range 434B being displayed in the status detail 430 component is for June 6 2011 - June 30 2011. A global status marker 431 indicates the status of the reference period is "Status on Target." Furthermore, a last refresh date label 435 shows the status data was refreshed on June 30 (at time 14:34), which is the last day of the reference period.

The status detail 430 includes a detailed visualization 432, which is made up of four segments 433A-D. Each segment depicts a color/shade to convey the status of a distinct sub-period of the reference period. Each of segments 433A-D indicates the status of the respective sub-period is "Status on Target."

The graphic visualization 420 includes five nested rings, representing five distinct historical reference periods. Each reference period represents a single month and each sub-period (depicted as a quadrant) of a reference period represents a week. The outer ring 421 represents the status data from May 2011, ring 422 represents the status data from April, ring 423 represents the status data from March 2011, ring 424 represents the status data from February 2011, and inner ring 425 represents the status data from January 2011. Each sub-period of rings 421-425 indicates the status of the respective sub-period is "Status on Target."

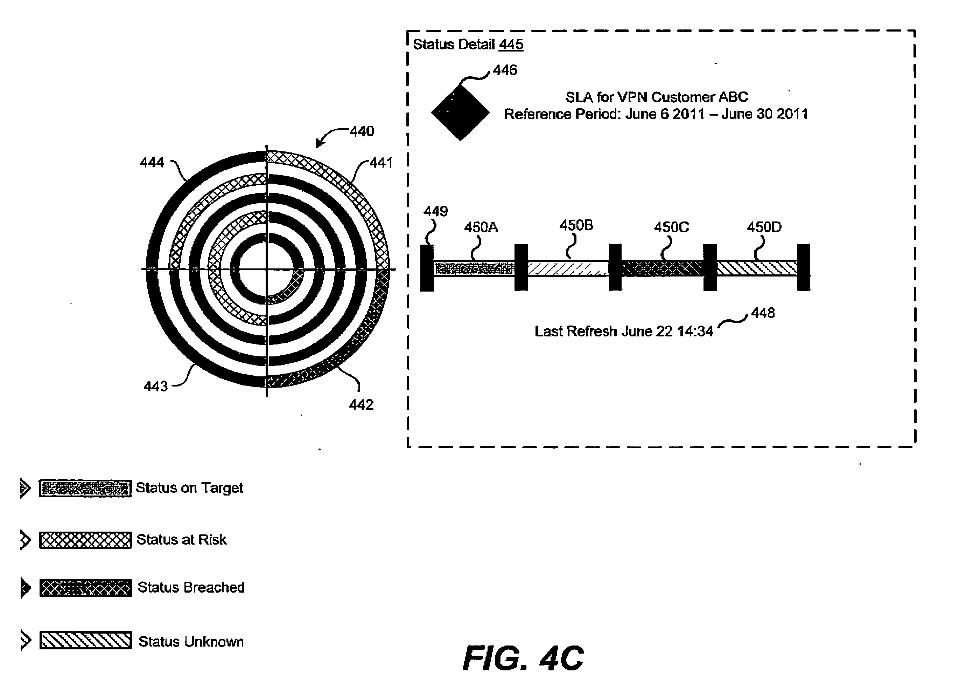

**FIG. 4C** is another graphical representation of status for a service level agreement in accordance with an embodiment. Completion status of a service level agreement for a VPN Customer ABC is conveyed using a graphical visualization of the set of selected historical reference periods ("histodoil graphical visualization") 440 and a status detail 445 component.

**FIG. 4C** is similar to **FIG.4B** except that a last refresh label 448 indicates that the status data was last updated on June 22 2011, which is before the end of the reference period, i.e., June 30 2011. Segment 450D, of detailed visualization 449, represents the status of the last week of June. As shown, the status is unknown or otherwise undetermined at the time of the last refresh.

Furthermore, segment 450B indicates the status of the corresponding sub-period is "Status at Risk,° and the segment 450C indicates the status of the corresponding sub-period status is "Status Breached." A global status marker 446 indicates the status of the entire reference period is "Status Breached," which is the last-computed status of a sub-period that is available at the time, i.e., status of segment 450C. It should be noted that the status of segment 450D has not been computed as yet, and as such, the last-computed status that is available is the status of segment 450C.

The graphic visualization of selected historical reference periods 440 includes five nested rings. The outer ring represents the status data from May 2011, and is comprised of four segments. Segment 441 represents the status of week 1, May 2011. Segment 442 represents the status of week 2, May 2011. Segment 443 represents the status of week 3, May 2011. Segment 444 represents the status of week 4, May 2011,

In one embodiment, when the SLA has been active through the end of the June 6 2011 - June 30 2011 reference period, the status data for segment 450D is known (e.g., last refresh date is July 1), the status data for the June 6 2011 - June 30 2011 reference period becomes represented by the outer ring in the historical graphical visualization 440. Before this occurs, the inner ring represented the status data from January, however, after the June reference period is represented in historical graphical visualization 440, the January reference period drops off, for example, where the maximum number of rings displayed is set at five. As such, historical graphical visualization 440 represents the status of February - June,

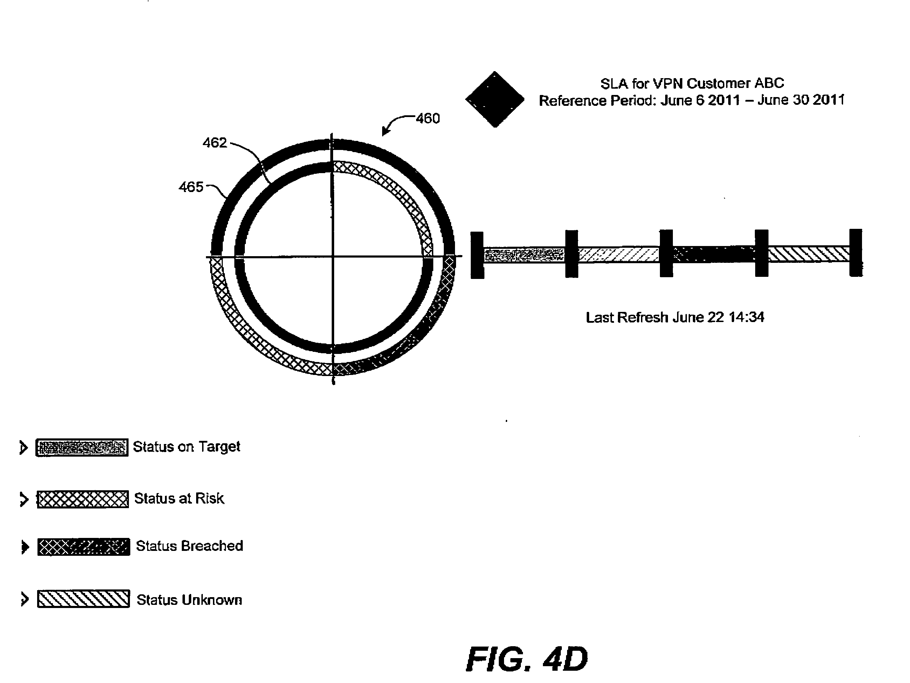

**FIG.** 4D is yet another graphical representation of status for a service level agreement in accordance with an embodiment. Status of a service level agreement for a VPN Customer ABC is conveyed using a graphical visualization of the set of selected historical reference periods 460 and a status detail component.

FIG.4D is similar to **FIG.4C** except that the historical graphical visualization 460 includes a set of two nested graphical rings, with an outer ring 465 that represents the status data from May 2011 and an inner ring 462 that represents the status data from April 2011. Such visualization may be expected for a newer SLA contract that has been active for about two and a half months.

P'IG. 4E is a graphical representation of status for a service level agreement including a status indicator in accordance with an embodiment. Completion status of a service level agreement for a VPN Customer ABC is conveyed using a graphical visualization of the set of selected historical reference periods 485, a status detail 495 component, and a navigation indicator 480.

In this example, a current reference period date range is for July 1 2011 - July 31 2011, however, the detailed visualization (as depicted in the status detail 495) is for a date range of June 6 2011 - June 30 2011, which is a historical reference period. A user may have interacted with the GUI to pull or otherwise select this historical reference period into the status detail 495.

As such, the navigation indicator 480 represents the current reference period for the month of July 2011. A color/shading of navigation indicator 480 conveys the status of the current reference period. In one embodiment, when a historical reference period is shown in the status detail component, the global status marker matches the status of the last updated sub-period. In this example, global status marker 496 indicates the status of the entire reference period is "Status on Target," which corresponds to the status of segment 497, which is the last computed status (i.e., week 4 of the reference period).

Furthermore, historical graphical visualization 485 represents the status data for the months preceding June. Specifically, the outer ring 486 represents the status data from May 2011, ring 487 represents the status data from April, ring 488 represents the status data from March 2011, ring 489 represents the status data from February 2011, and inner ring 490 represents the status data from January 2011.

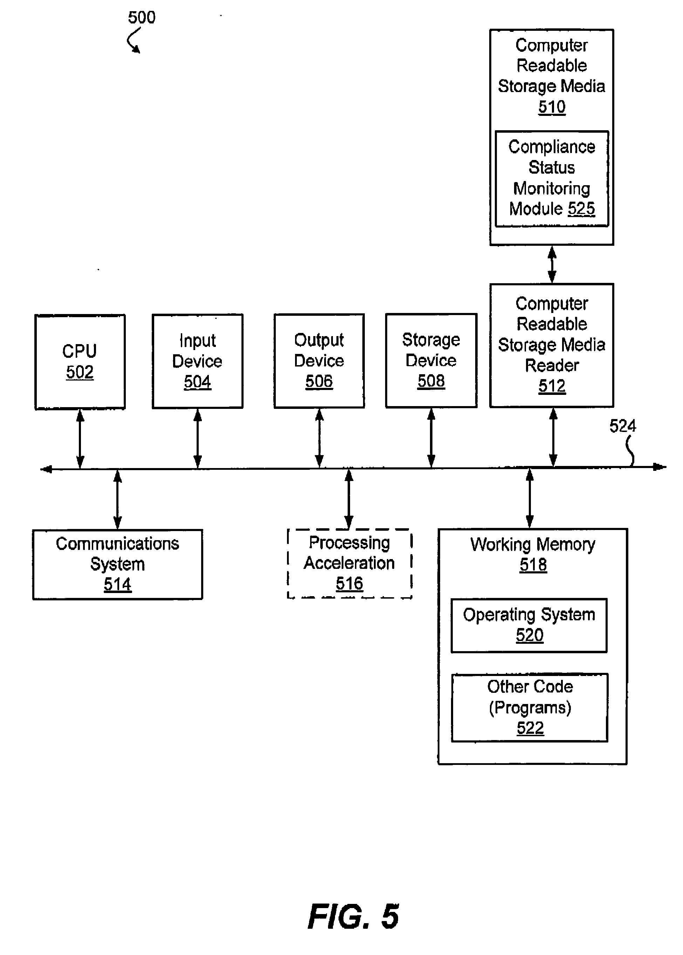

FIG. 5 illustrates a computer system in which an embodiment may be implemented. The system 500 may be used to implement any of the computer systems described above. The computer system 500 is shown comprising hardware elements that may be electrically coupled via a bus 524. The hardware elements may include at least one central processing unit (CPU) 502, at least one input device 504, and at least one output device 506. The computer system 500 may also include at least one storage device 508. By way of example, the storage device 508 can include devices such as disk drives, optical storage devices, solid-state storage device such as a random access memory ("RAM") and/or a read-only memory ("ROM"), which can be programmable, flash-updateable and/or the like.

The computer system 500 may additionally include a computer-readable storage media reader 512, a communications system 514 (e.g., a modem, a network card (wireless or wired), an infra-red communication device, etc.), and working memory 518, which may include RAM and ROM devices as described above. In some embodiments, the computer system 500 may also include a processing acceleration unit 516, which can include a digital signal processor (DSP), a special-purpose processor, and/or the like.

The computer-readable storage media reader 512 can further be connected to a computer-readable storage medium 510, together (and in combination with storage device 508 in one embodiment) comprehensively representing remote, local, fixed, and/or removable storage devices plus any tangible non-transitory storage media, for temporarily and/or more permanently containing, storing, transmitting, and retrieving computer-readable information (e.g., instructions and data). Computer-readable storage medium 510 may be non-transitory such as hardware storage devices (e.g., RAM, ROM, EPROM (erasable programmable ROM), EEPROM (electrically erasable programmable ROM), hard drives, and flash memory). The communications system 514 may permit data to be exchanged with the network and/or any other computer described above with respect to the system 500. Computer-readable storage medium 510 includes a completion status monitoring module 525.

The computer system 500 may also comprise software elements, which are machine readable instructions, shown as being currently located within a working memory 518, including an operating system 520 and/or other code 522, such as an application program (which may be a client application, Web browser, mid-tier application, etc.). It should be appreciated that alternate embodiments of a computer system 500 may have numerous variations from that described above. For example, customized hardware might also be used and/or particular elements might be implemented in hardware, software (including portable software, such as applets), or both. Further, connection to other computing devices such as network input/output devices may be employed.

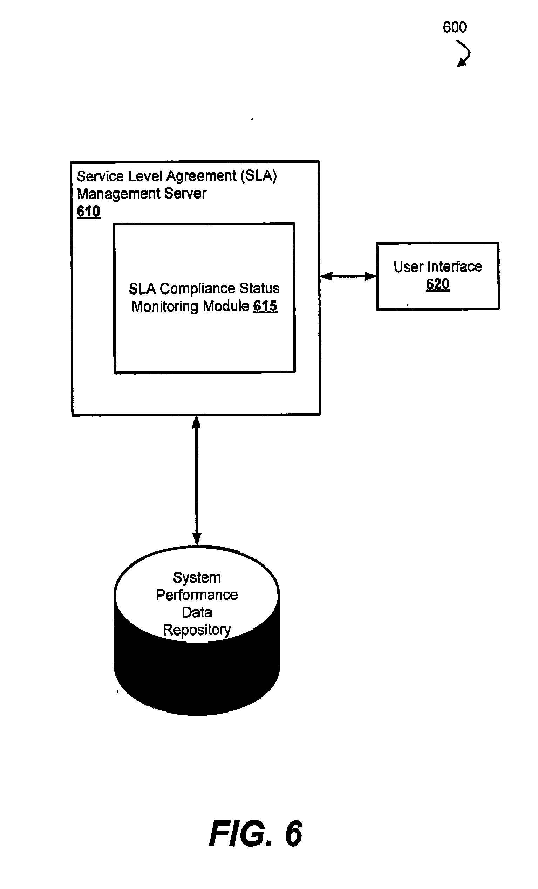

FIG. 6 is a topological block diagram of a Service Level Agreement (SLA) management system 600 in accordance with an embodiment.. The SLA management system 600 may be deployed in a CSP network, and includes an SLA management server 610, a user interface 620, and a system performance data repository 630.

The SLA management server 610 is operatively connected to user interface 620 and system performance data repository 630 and the connections may include multiple network segments, transmission technologies and components. The SLA management server 610 is generally configured to automate the creation, administration, and reporting of SLAs, and to compute real-time SLA compliance status. The SLA management server 610 is further configured to monitor SLAs by collecting raw system performance data, for example, from system performance data repository 630, transforming the raw system performance data into KPls, and evaluating the KPls against the defined levels of service.

The SLA management server 610 includes an SLA compliance status monitoring module 615, which is configured to generate a graphical visualization of historical reference periods, a detailed visualization, and a graphical navigation indicator.

The user interface 620 is operatively connected to SLA management server 610, The user interface 620 is configured to receive and display the graphical visualization of historical reference periods, the detailed visualization, and the graphical navigation indicator on a client that is connected or networked with SLA management server 610. The user interface 620 is further configured to provide a dynamic control to enable users to perform various actions and to transmit the user actions to SLA management server 610.

The system performance data repository 630 is operatively connected to SLA management server 610, and is configured to store and provide system performance data.

The specification and drawings are, accordingly, to be regarded in an illustrative rather than a restrictive sense. It will, however, be evident that various modifications and changes may be made.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example of a generic series of equivalent or similar features.

## Claims

1. A computer implemented method for monitoring compliance status, the method comprising:
determining system performance data for a plurality of time-ordered reference periods;
determining a compliance status for each reference period based on the system performance data;
for each reference period, determining whether the reference period is a historical reference period or a current reference period;
determining a set of selected historical reference periods to display; and
generating a graphical visualization of the set of selected historical reference periods using a set of nested graphical objects, wherein each graphical object in the set of nested graphical objects represents a compliance status of a historical reference period of the set of selected historical reference periods.

2. The method of claim 1, further comprising:
generating a graphical navigation indicator to identify presence of a next consecutive reference period.

3. The method of claim 2, further comprising:
receiving user input through a control interface of the graphical navigation indicator: and
generating a detailed visualization of current reference period.

4. The method of claim 1, wherein each graphical object in the set of nested graphical objects is a graphical ring.

5. The method of claim 1, wherein the set of graphical objects is arranged in the graphical visualization in priority order.

6. The method of claim 1, wherein a current reference period includes a plurality of sub-periods, the method further comprising:
determining a compliance status for each sub-period of the plurality of sub-periods of the current reference period;
generating a detailed visualization of the current reference period using a stacked bar object comprising a plurality of segments, wherein each segment of the plurality of segments represents compliance status of a sub-period of the current reference period; and
generating a global status marker to indicate compliance status for the current reference period.

7. The method of claim 6, wherein generating the global status marker comprises:
for each sub-period of the current reference period, determining a compliance status of a sub-period; and
determining a computed compliance status of a last sub-period of the plurality of sub-periods.

8. The method of claim 6, wherein the detailed visualization is adjacent to the graphical visualization of the set of selected historical reference periods.

9. The method of claim 1, wherein a chosen historical reference period includes a plurality of sub-periods, further comprising:
determining a compliance status for each sub-period of the plurality of sub-periods of the chosen historical reference period;
generating a detailed visualization of the chosen historical reference period using a stacked bar object comprising a plurality of segments, wherein each segment of the plurality of segments represents compliance status of a sub-period of the current reference period; and
generating a global status marker to indicate compliance status for the chosen historical reference period.

10. The method of claim 9, wherein the detailed visualization further comprises an identifier of a service level agreement, a date range of the chosen historical reference period, and a last refresh date.

11. The method of claim 1, further comprising:
receiving a selection of a historical reference period of the set of selected historical reference periods, wherein the selection is made through a control interface of the graphical visualization of the set; and
generating a detailed visualization of the selected historical reference period.

12. A non-transitory computer-readable medium storing a plurality of instructions to control a data processor, the plurality of instructions comprising instructions that cause the data processor to:
determine system performance data for a plurality of time-ordered reference periods;
determine a compliance status for each reference period based on the system performance data;
for each reference period, determine whether the reference period is a historical reference period or a current reference period;
determine a set of selected historical reference periods to display; and
generate a graphical visualization of the set of selected historical reference periods using a set of nested graphical objects, wherein each graphical object in the set of nested graphical objects represents a compliance status of a historical reference period of the set of selected historical reference periods.

13. The non-transitory computer-readable medium of claim 12, wherein a current reference period includes a plurality of sub-periods , and wherein the plurality of instructions further comprise instructions that cause the data processor to:
determine a compliance status for each sub-period of the plurality of sub-periods of the current reference period;
generate a detailed visualization of the current reference period using a stacked bar object comprising a plurality of segments, wherein each segment of the plurality of segments represents compliance status of a sub-period of the current reference period: and
generate a global status marker to indicate compliance status for the current reference period.

14. A system for monitoring Service Level Agreement (SLA) compliance status, the system comprising:
a repository for storage of system performance data for a plurality of time-ordered reference periods;
a server for determining a compliance status for each reference period based on the system performance data, wherein the server includes a monitoring module which is configured to:
for each reference period, determine whether the reference period is a historical reference period or a current reference period;
determine a set of selected historical reference periods to display;
and
generate a graphical visualization of the set of selected historical reference periods using a set of nested graphical objects, wherein each graphical object in the set of nested graphical objects represents a compliance status of a historical reference period of the set of selected historical reference periods; and
a user interface to display the graphical visualization.

15. The system of claim 1, wherein a current reference period includes a plurality of sub-periods, and wherein the monitoring module is further configured to:
determine a compliance status for each sub-period of the plurality of sub-periods of the current reference period:
generate a detailed visualization of the current reference period using a stacked bar object comprising a plurality of segments, wherein each segment of the plurality of segments represents compliance status of a sub-period of the current reference period; and
generate a global status marker to indicate compliance status for the current reference period.
